Europäisches Patentamt

(19) European Patent Office

. Office européen des brevets

(11) Numéro de publication: **0 083 544**
**B1**

(12) **FASCICULE DE BREVET EUROPEEN**

(45) Date de publication du fascicule du brevet: **02.09.87**

(21) Numéro de dépôt: **82402388.1**

(22) Date de dépôt: **28.12.82**

㉛· Int. Cl.⁴: **G 01 S 17/88, H 01 Q 15/00**

(54) **Dispositif d'émission-réception d'ondes électromagnétiques à zone(s) de réflexion sélective(s).**

(30) Priorité: **28.12.81 FR 8124265**

(43) Date de publication de la demande:
**13.07.83 Bulletin 83/28**

(45) Mention de la délivrance du brevet:
**02.09.87 Bulletin 87/36**

(84) Etats contractants désignés:
**BE DE FR GB IT NL SE**

(56) Documents cités:
**FR-A- 803 882**
**FR-A-1 150 765**
**FR-A-1 557 876**
**GB-A-2 060 307**
**US-A-3 935 818**
**US-A-4 309 946**
**US-A-4 310 760**

(73) Titulaire: **Fricot, Claude**
**60, Hameau des peupliers**
**F-91770 St. Vrain (FR)**

(72) Inventeur: **Fricot, Claude**
**60, Hameau des peupliers**
**F-91770 St. Vrain (FR)**

(74) Mandataire: **Flavenot, Bernard**
**Société ABRITT 17, rue du Docteur Charcot La**
**Norville**
**F-91290 Arpajon (FR)**

Courier Press, Leamington Spa, England.

## Description

La présente invention concerne un dispositif d'émission-réception d'ondes électromagnétiques à zone(s) de réflexion sélective(s) applicable notamment, mais non exclusivement, aux systèmes utilisés sur un véhicule qui permettant au conducteur de maintenir ce véhicule en dehors d'au moins une limite d'une voie, cette limite étant matérialisée, par exemple, par une bande de revêtement de teinte plus claire que le revêtement de la route s'il s'agit d'un véhicule routier.

On sait que, dans ce dernier cas, les systèmes précités, plus ou moins complexes, utilisent des moyens récepteurs d'ondes électromagnétiques montés à bord du véhicule, éventuellement des moyens générateurs d'ondes électromagnétiques généralement montés à bord du véhicule, et, le plus souvent, des moyens matérialisant la ou les limites du trajet que doit suivre le véhicule.

L'invention est applicable à un système avec moyens récepteurs et moyens générateurs d'ondes électromagnétiques, ces moyens constituant un dispositif d'émission-réception, avec au moins un émetteur dont le faisceau est orienté de manière à intercepter une surface à analyser ou partie d'une voie que délimitent généralement des moyens, de matérialisation, et au moins un récepteur orienté de manié à recevoir les ondes éventuellement formées par réflexion catadioptrique ou diffusante sur la surface précitée.

On sait également qu'en cours d'utilisation, les systèmes précités peuvent avoir, en dépit des précautions prises, le fonctionnement de leurs circuits perturbés par des interférences dues à des ondes réfléchies sur des surfaces parasites formant miroir (nappes d'eau par exemple).

L'invention a pour objectif un dispositif d'émission-réception d'ondes électromagnétiques tel que, dans un système du type précité il élimine par construction les réflexions parasites sur des surfaces ne présentant pas des caractéristiques catadiotriques ou diffusantes: nappes liquides ou autres surfaces brillantes formant miroir.

L'invention indique la solution de ce problème par les caractéristiques de la revendication 1.

La suite de la description se réfère aux dessins annexés qui représentent:

—figure 1a, une illustration schématique d'un exemple de réalisation conforme à l'invention,

—figure 1b, la zone commune d'intercéption obtenue avec le dispositif de la figure la, dans laquelle est inscrite l'aire non visible par le récepteur,

—figure 2a, une illustration schématique d'un exemple de réalisation recommandé, conforme à l'invention,

—figure 2b, la zone commune d'intercéption obtenue avec le dispositif 2a, dans laquelle est inscrite l'aire non visible par le récepteur.

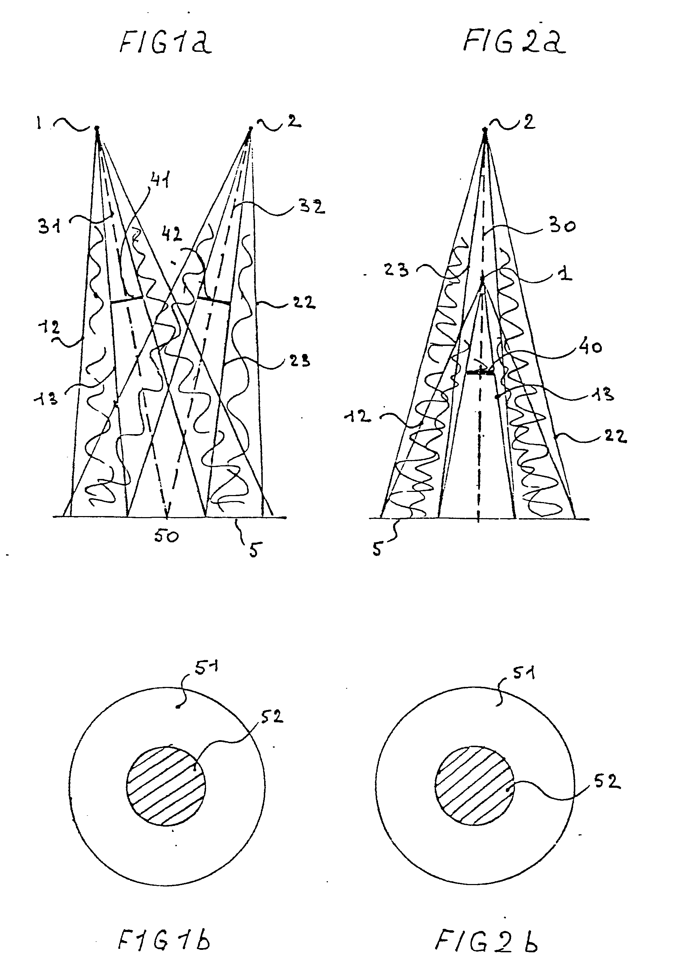

On a donc représente schématiquement figure la un dispositif comportant un émetteur 1 et récepteur 2, ces derniers étant montés à l'avant d'un véhicule par exemple, traversalement à l'axe de défilement d'une surface à analyser 5, tous deux à même distance de cette surface. Les faisceaux d'émission 12 et de réception 22 définissent, sur la surface à analyser, une zone commune d'intercéption (51 (figure 1b). Un tel dispositif est connu par le document EP—A—49722 et peut-être associé à un système permettant au conducteur d'un véhicule de maintenir ce véhicule en dehors d'au moins une limite d'une voie qui constitue la surface à analyser, cette limite étant matérialisée, par exemple, par une bande de revêtement de teinte plus claire que le revêtement de la route s'il s'agit d'un véhicule routier, et cette bande ayant des caractéristiques de réflexion catadioptrique ou diffusante.

Le système précité est conçu de telle sorte qu'il devient actif lorsque le dispositif d'émission-réception intercepte une partie de voie comportant la bande limite.

Dans de tels systèmes, des précautions sont généralement prises pour réduire les réflexions parasites sur les surfaces formant miroir, soit sur les surfaces telles que les flaques d'eau qui réfléchissent les ondes électromagnétiques en provenance de l'émetteur symétriquement par rapport à l'axe du faisceau d'émission. Les moyens mis en place à cette fin ne sont toutefois pas parfaits et exigent de faire appel à des circuits supplémentaires qui compliquent le traitement du signal formé par le récepteur et augmentent le prix de revient du système.

Conformément à l'invention, on associe, à l'ensemble émetteur-récepteur du dispositif, des moyens permettant de définir, dans la zone commune d'interception 51, au moins une aire 52 inactive pour le récepteur 2, dans laquelle se situent les points qui réfléchissent les ondes incidentes symétriquement par rapport à l'axe 31 du faisceau d'ondes incidentes. Sur la figure 1a, ces moyens sont constituées par deux écrans, l'un 41 placé dans le faisceau, d'émission 12 coupant l'axe 31 de ce faisceau et définissant un volume "neutre" 13 exempt d'ondes électromagnétiques émises, l'autre 42 placé dans le faisceau de réception 22, coupant l'axe 32 de ce faisceau et définissant un volume "neutre" 23 exempt d'ondes électromagnétiques réfléchies. Ces deux écrans sont circulaires dans l'exemple représenté; ils forment sur la surface 5, et à l'intérieur de la zone commune d'interception 51, l'aire circulaire 52.

Sur le dessin de principe que l'on a fait du dispositif figure 1a, l'émetteur et le récepteur sont représentés par des éléments ponctuels. Et en principle donc, pour une zone d'interception donnée sur la surface 5, il n'existe qu'un seul point 50 pouvant donner lieu à réflexion parasite Pratiquement, l'émetteur et le récepteur ne sont pas, bien entendu, des éléments ponctuels, aussi définit-on, à l'aide des écrans 41 et 42, une aire 52 d'une certaine dimension afin de rendre parfaitement fiable le dispositif. Par exemple, le diamètre de l'aire 52 sera de l'ordre de 30% du diamètre de la zone 51. En principe également, un seul des écrans 41 et 42 est nécessaire; mais il est préférable de les monter tous les deux, toujours pour des raisons de fiabilité.

La variante que l'on a illustré figure 2 est une version recommandée du dispositif conforme à l'invention. Elle comportante un émetteur 1 et un récepteur 2 montés sur le même axe 30, de telle sorte que les faisceaux d'émission 12 et de réception 22 sont coaxiaux; l'émetteur 1 étant situé entre le récepteur 2 et la surface à analyser 5, et un seul écran 40, coupant l'axe commun 30, étant monté entre cet émetteur et cette surface. Comme précédemment, les faisceaux délimitent par exemple sur la surface 5 une zone d'interception commune 51, et l'écran 40 forme dans cette zone une aire 52 non visible par le récepteur 2, dans laquelle se situent les points de réflexion parasites. Comme précédemment, et parce que l'émetteur et le récepteur ne sont pas des elements ponctuels, on donne une certaine dimension à l'écran 40.

La version illustrée figure 2a est une version recommandée pour un dispositif monté sur un véhicule se déplaçant sur une surface qui peut être déformée, ou pouvant être déxasée par rapport à la surface de déplacement; autrement dit, cette version est recommandée lorsque l'axe 30 peut prendre une orientation légèrement inclinée vers la surface 5. La zone de reflexion utile, soit extérieure à l'aire 52 dans la zone d'interception 51, donne, en sortie du récepteur, un signal électrique de variation faible, le taux de réflexion de la surface diminuant avec l'angle formé par l'axe 30 et la surface 5; mais, l'écran étant simultanément déplacé du fait de la construction intégrée du dispositif, le récepteur 2 reçoit plus de signal.

Dans une réalisation pratique du dispositif illustre les, paramêtres sont les suivants:

—dispositifs montés à l'avant d'un véhicule à l'avant gauche ou droit (deux dispositifs pouvant être montés à gauche et à droite),

—émetteur infrarouge du type TEXAS TIL 32 situé à 30 Cm de la surface sur laquelle se déplace le véhicule,

—récepteur infrarouge du type TEXAS TIL 81 situé à 35 Cm de la surface sur laquelle se déplace le véhicule,

— écran circulaire de Ø 10 situé au point d'émission.

Il est entendu que la description qui précéde a été faite à titre d'exemple non limitatif et que des variantes peuvent être envisagées sans, pour cela, sortir du cadre de l'invention. C'est ainsi que les écrans peuvent avoir une toute autre forme qu'une forme circulaire et peuvent définir, dans la zone d'interception, une ou plusieurs aires de forme quelconque au niveau de points pour lesquels toute réflexion doit être élimine. C'est ainsi également que le dispositif peut comporter plusieurs émetteurs et plusieurs récepteurs alignés sur des axes perpendiculaires au plan des dessins, le ou les écrans étant alors de forme allongée perpendiculairement au plan du dessin.

## Revendications

1. Dispositif d'émission-réception d'ondes électromagnétiques à zone(s) de réception sélective(s), pour véhicule routier, permettant au conducteur de maintenir ce véhicule hors d'une ou des limite(s) d'une voie, limite(s) pouvant être matérialisée(s) par une bande de revêtement de teinte plus claire que le revêtement de la route, le dit dispositif permettant d'éliminer les réflexions parasites symétriques sur des surfaces ne présentant pas de caractéristiques catadioptriques ou diffusantes (nappes liquides ou autres formant miroir) et comportant au moins un émetteur (1) et au moins un récepteur (2), caractérisé en ce que la disposition de l'émetteur (1) et celle du récepteur (2) ainsi que leurs orientations respectives sont telles que les faisceaux émetteurs (12) et récepteurs (22) sont inscrits dans des volumes côniques pour définir sur la surface analysée (5) une zone d'interception circulaire (51) avec les axes des deux faisceaux passant par le centre de ladite zone d'interception, avec des moyens formant écran (41—42—40) placés au moins du côté du faisceau émetteur de manière à définir, dans ladite zone d'interception, une aire (52) inactive pour le récepteur dans laquelle se situent les points que réfléchissent les ondes incidentes du faisceau d'émission (12) symétriquement par rapport à l'axe (31—30) de ce faisceau.

2. Dispositif selon la revendication 1, caractérisé en ce que, l'émetteur (1) et le récepteur (2) étant disposés sur le véhicule dans un même plan parallèle au plan de la surface à analyser (5) et orientés de telle sorte, en fonction de la distance entre lesdits plans, que les axes de leurs faisceaux respectifs se coupent au niveau du plan de la surface (5), ledit dispositif comporte au moins un écran circulaire (41 ou 42) situé perpendiculairement à l'axe du faisceau émetteur ou récepteur, entre les deux plans précités, à une distance de la surface (5) telle que, compte tenu de son diamêtre, il n'occulte qu'une partie de la zone d'interception (51) au centre de cette zone.

3. Dispositif selon la revendication 1, caractérisé en ce que l'émetteur (1) et le récepteur (2) étant disposés sur le véhicule sur un axe commun (30) perpendiculairement au plan de la surface à analyser (5) cet axe étant confondu avec l'axe de leurs faisceaux respectifs, avec l'émetteur (1) situé entre le récepteur (2) et la surface (5), le dit dispositif comporte un écran unique circulaire (40) monté entre l'émetteur et la surface (5) perpendiculairement à l'axe commun (30) et parallèlement à la surface (5) à distance telle de cette surface, compte tenu de son diamêtre, qu'il n'occulte qu'une partie de la zone d'interception (51) au centre de cette zone.

## Patentansprüche

1. Sende-Empfangs-Anordnung für elektromagnetische Wellen bezüglich (einer) ausgewählten Empfangszone(n) für ein Straßenfahrzeug, welche es dem Fahrzeugführer ermöglicht, dieses Fahrzeug außerhalb einer oder der Begrenzung(en) eines Weges zu halten, welche Begrenzung(en) durch ein Beschichtungsband einer Farbe materialisiert sein kann (können), die heller ist als der Straßenbelag, welche Anordnung es ermöglicht, parasitäre auf der Oberfläche symmetrische Reflexionen zu eliminieren, die nicht katadioptrische oder diffundierende Charakteristik aufweisen (Flüssigkeitsschichten oder andere spiegelbildende), und mindestens einen Sender (1) und mindestens einen Empfänger (2) umfaßt, dadurch gekennzeichnet, daß die Anordnung des Senders (1) und die des Empfängers (2) sowie ihre jeweilige Orientierung derart sind, daß das Sendestrahlenbündel (12) und das Empfangsstrahlenbündel (22) in ein konisches Volumen eingeschrieben sind für die Definition, auf der analysierten Oberfläche (5), einer runden Interzeptionszone (51), durch deren Zentrum die Achsen der beiden Bündel verlaufen, mit schmirmbildenden Mitteln (41—42—40), die mindestens sendebündelseitig derart angeordnet sind, daß in der Interzeptionszone ein für den Empfänger inaktiver Bereich (52) definiert wird, in dem sich die Punkte befinden, welche die auftreffenden Wellen des Sendebündels (12) symmetrisch bezüglich der Achse (31—30) dieses Bündels reflektieren.

2. Anordnung nach Anspruch 1, dadurch gekennzeichnet, daß der Sender (1) und der Empfänger (2) an dem Fahrzeug in einer gemeinsamen Ebene parallel zur Ebene der zu analysierenden Oberfläche (5) angeordnet und derart in Funktion des Abstands zwischen diesen Ebenen orientiert sind, daß die Achsen ihrer jeweiligen Strahlenbündel sich in Höhe der Ebene der Oberfläche (5) schneiden, wobei die Anordnung mindestens einen runden Schirm (41 oder 42) umfaßt, der sich senkrecht zur Achse des Sende- oder Empfangsbündels zwischen den beiden vorgenannten Ebenen in einem Abstand von der Oberfläche derart befindet, daß er unter Berücksichtigung seines Durchmessers nur eine Partie der Interzeptionszone (51) im Zentrum dieser Zone abschattet.

3. Anordnung nach Anspruch 1, dadurch gekennzeichnet, daß der Sender (1) und der Empfänger (2) an dem Fahrzeug auf einer gemeinsamen, zur Ebene der zu analysierenden Oberfläche senkrechten Achse (30) angeordnet sind, welche Achse mit der Achse ihrer jeweiligen Strahlenbündel zusammenfällt, wobei sich der Sender (1) zwischen dem Empfänger (2) und der Oberfläche (5) befindet, welche Anordnung einen einzigen runden Schirm (40) umfaßt, der zwischen dem Sender und der Oberfläche (5) senkrecht zu der gemeinsamen Achse (30) und parallel zu der Oberfläche in einem Abstand von dieser Oberfläche derart angeordnet ist, daß er unter Berücksichtigung seines Durchmessers nur eine Partie der Interzeptionszone (51) im Zentrum dieser Zone abschattet.

## Claims

1. A transmitter-receiver device for a road vehicle for transmitting and receiving electromagnetic waves having one or more selective reception zones to enable the vehicle driver to keep the vehicle away from one or more path limits that may be marked by means of respective strips of surfacing lighter in colour than the road surfacing, said device being capable of eliminating symmetrical interfering reflections from surfaces that do not have catadioptric or diffusing characteristics (mirror-forming sheets of liquids or other substances) and comprising at least one transmitter (1) and at least one receiver (2), the device being characterized in that the dispositions of the transmitter (1) and of the receiver (2) and their respective orientations are such that the beams transmitted (12) and received (22) lie in conical volumes to define a circular interception zone (51) on the scanned surface (5) with the axes of both beams passing through the center of said interception zone, with screenforming means (41—42—40) placed at least in the transmitted beam in such a manner as to define an area (52) in said interception zone which is inactive for the receiver and which contains the points that reflect the incident beam (12) symmetrically about the axis (31—30) of said beam.

2. A device according to claim 1, characterized in that since the transmitter (1) and the receiver (2) are disposed on the vehicle in a common plane parallel to the plane of the surface (5) to be scanned, and are oriented as a function of the distance between said planes in such a manner that the axes of their respective beams intersect in the plane of the surface (5), said device includes at least one circular screen (41 or 42) situated perpendicularly to the axis of the transmitted beam or of the received beam in between said two planes and at a distance from the surface (5) which, given the diameter of the screen, is such that the screen masks only a central portion of the interception zone (51).

3. A device according to claim 1, characterized in that since the transmitter (1) and the receiver (2) are disposed on the vehicle on a common axis (30) perpendicular to the plane of the surface (5) to be analysed, said axis being the same as the axes of their respective beams, with the transmitter (1) being situated between the receiver (2) and the surface (5), said device includes a single circular screen (40) mounted between the transmitter and the surface (5) perpendicularly to the common axis (30) and parallel to the surface (5) at a distance from said surface which, given the diameter of the screen, is such that the screen masks only a central portion of the interception zone (51).

FIG 1a

FIG 2a

FIG 1b

FIG 2b